# EUROPÄISCHE PATENTSCHRIFT

(11) **EP 2 837 527 B1**
(45) Veröffentlichungstag und Bekanntmachung des Hinweises auf die Patenterteilung: **20.06.2018**
(21) Anmeldenummer: 13180366.0
(22) Anmeldetag: 14.08.2013
(51) Int. Cl.: B60N 2/24, B60N 2/30

(54) **Blockierbarer Klappsitz**
Lockable folding seat
Siège rabattable pouvant être bloqué

(43) Veröffentlichungstag der Anmeldung: 18.02.2015
(73) Patentinhaber: Franz Kiel GmbH, 86720 Nördlingen (DE)
(72) Erfinder: Mill, Jürgen, 73479 Ellwangen (DE)
(74) Vertreter: Schmid, Wolfgang

(56) Entgegenhaltungen:
- DE-A1- 19 849 617
- US-A- 4 294 048
- US-A1- 2003 038 519

## Beschreibung

Die Erfindung betrifft einen Fahrgastsitz mit einer Rückenlehne und einer Sitzfläche nach der im Oberbegriff von Anspruch 1 näher definierten Art.

Ein gattungsgemäßer Fahrgastsitz ist aus der US 2003/0038519 A1 bekannt. Dabei kann der gesamte Sitz gegenüber einer festen Struktur des Verkehrsmittels, in dem er verbaut ist, verschwenkt werden. Des Weiteren kann die Sitzfläche zwischen einer im Wesentlichen horizontalen Nutzstellung und einer im Wesentlichen vertikalen Ruhestellung geschwenkt werden. In der vertikalen Ruhestellung ergibt sich eine Verriegelung der Sitzfläche mittels einer einem die Sitzfläche mit der Rückenlehne verbindenden Flansch zugeordneten Verriegelungseinrichtung.

Meist werden die zum Verriegeln der Sitzfläche dieser Fahrgastsitze dienenden Verriegelungseinrichtungen manuell bedient, um eine Nutzung des entsprechenden Fahrgastsitzes zu verhindern, da auf diese Weise zum Beispiel in öffentlichen Verkehrsmitteln eine größere Anzahl an Fahrgästen aufgenommen werden kann. Bei großen Bussen stellt diese manuelle Verriegelung der Sitzfläche in ihrer vertikalen Ruhestellung, in der die Sitzfläche nach oben geklappt ist, einen sehr großen Aufwand dar, der unter anderem aufgrund der Notwendigkeit, den Fahrplan einzuhalten, vom Fahrer eines Busses nicht erbracht werden kann.

In der DE 198 49 617 A1 sind ein Verfahren und eine Vorrichtung zur Rückstellung von verstellbaren Sitzeinheiten in öffentlichen Verkehrsmitteln beschrieben, mit deren Hilfe über ein gemeinsames, am Fahrerplatz angebrachtes Fernbedienungsmittel sämtliche Sitzeinheiten in eine Neutralstellung rückgestellt werden können.

Es ist daher Aufgabe der vorliegenden Erfindung, einen Fahrgastsitz mit einer Rückenlehne und einer gegenüber der Rückenlehne klappbaren Sitzfläche zu schaffen, der eine einfachere Verriegelung der Sitzfläche in ihrer vertikalen Ruhestellung aufweist.

Erfindungsgemäß wird diese Aufgabe durch die in Anspruch 1 genannten Merkmale gelöst.

Durch die erfindungsgemäß von einer von dem Fahrgastsitz entfernten Position, d.h., von einem Fahrer des Verkehrsmittels von seinem Fahrersitz aus steuerbare Verriegelungseinrichtung, mit welcher die Sitzfläche in ihrer vertikalen Ruhestellung verriegelt werden kann, ist es beispielsweise einem Fahrer eines Busses möglich, von seinem Fahrersitz aus bestimmte oder gegebenenfalls auch sämtliche Fahrgastsitze, die sich in dem Bus befinden, zu verriegeln, so dass eine Nutzung dieser Fahrgastsitze nicht mehr möglich ist.

Dabei ist eine Verriegelung der Sitzfläche in ihrer Ruhestellung mittels des Verriegelungselements nur dann möglich, wenn sich die Sitzfläche bereits in ihrer Ruhestellung befindet. Sollte sich die Sitzfläche dagegen in ihrer horizontalen Nutzstellung befinden, was insbesondere dann der Fall ist, wenn sich ein Fahrgast auf dem jeweiligen Fahrgastsitz befindet, so wird die Sitzfläche nicht automatisch in ihre vertikale Ruhestellung gebracht. Vielmehr findet die Verriegelung der Sitzfläche in ihrer vertikalen Ruhestellung in einem solchen Fall erst dann statt, wenn der Fahrgast den jeweiligen Sitz verlässt und die Sitzfläche sich dann selbsttätig von ihrer horizontalen Nutzstellung in ihre vertikale Ruhestellung bewegt.

Die erfindungsgemäße Lösung vereinfacht die Verriegelung der Sitzfläche des Fahrgastsitzes in ihrer vertikalen Ruhestellung erheblich und bietet dadurch die Möglichkeit, bestimmte Fahrgastsitze für eine Nutzung zu sperren, um auf diese Weise mehr Platz im Innenraum des Verkehrsmittels zu schaffen und dadurch letztendlich mehr Fahrgäste aufnehmen zu können.

Eine gleichermaßen einfache und zuverlässige Ansteuerung des Verriegelungselements ergibt sich, wenn in einer sehr vorteilhaften Weiterbildung der Erfindung das Verriegelungselement mittels einer elektrischen Betätigungseinrichtung in seine die Sitzfläche in ihrer Ruhestellung verriegelnde Position beweglich ist.

Dabei kann vorgesehen sein, dass die elektrische Betätigungseinrichtung als Elektromagnet ausgebildet ist. Durch die Verwendung eines Elektromagneten zur Bewegung des Verriegelungselements ist eine in der Praxis sehr zuverlässige Ausführung der elektrischen Betätigungseinrichtung gegeben.

Des Weiteren kann vorgesehen sein, dass das Verriegelungselement in eine Öffnung eines mit der Sitzfläche zumindest mittelbar verbundenen Bauteils einfahrbar ist, wodurch sich eine mit geringem Aufwand zu realisierende Konstruktion für die Verriegelung der Sitzfläche ergibt.

Wenn dabei die in dem mit der Sitzfläche verbundenen Bauteil vorgesehene Öffnung als Langloch ausgebildet ist, so kann die Sitzfläche in ihrer vertikalen Ruhestellung, in der sie mittels der Verriegelungseinrichtung verriegelt wird, dennoch um einen gewissen Betrag gekippt werden, beispielsweise um einen zwischen der Sitzfläche und der Rückenlehne eingeklemmten Gegenstand durch leichtes Neigen der Sitzfläche in Richtung ihrer horizontalen Nutzstellung entfernen zu können. Des Weiteren ist auf diese Weise sichergestellt, dass auch in dem Fall, in dem sich zwischen der Sitzfläche und der Rückenlehne ein Gegenstand befindet und die Sitzfläche dadurch ihre vertikale Ruhestellung nicht vollständig einnehmen kann, eine Verriegelung der Sitzfläche stattfindet. Von der oben erläuterten Verriegelung der Sitzfläche in ihrer vertikalen Ruhestellung ist demnach auch ein Zustand umfasst, in dem die Sitzfläche ausgehend von ihrer vertikalen Ruhestellung um einen bestimmten, durch die Länge des Langlochs festgelegten Winkel in Richtung ihrer horizontalen Nutzstellung gekippt werden kann.

Des Weiteren kann in einer vorteilhaften Weiterbildung der Erfindung ein Sperrelement vorgesehen sein, das in der Nutzstellung der Sitzfläche so gegenüber dem Verriegelungselement angeordnet ist, dass es die Bewegung des Verriegelungselements blockiert. Durch das Sperrelement wird das Verriegelungselement daran gehindert, sich in seine Endstellung zu bewegen, so dass, wenn sich die Sitzfläche in ihrer horizontalen Nutzstellung befindet, die Bewegung des Verriegelungselements blockiert wird. Auf diese Weise wird verhindert, dass das Verriegelungselement sich in seine Endstellung bewegt, wenn das mit der Sitzfläche verbundene Bauteil noch nicht in der Position ist, in der sich die Öffnung in demselben vor dem Verriegelungselement befindet.

Um das Sperrelement zuverlässig und mit einfachen Mitteln in seiner das Verriegelungselement blockierenden Stellung zu halten, kann des Weiteren vorgesehen sein, dass das Sperrelement durch ein Federelement in seiner die Bewegung des Verriegelungselements blockierenden Stellung gehalten ist.

Eine weitere sehr vorteilhafte Ausgestaltung der Erfindung kann darin bestehen, dass das mit der Sitzfläche verbundene Bauteil so gegenüber dem Sperrelement angeordnet ist, dass das Sperrelement durch die Bewegung des mit der Sitzfläche verbundenen Bauteils in eine die Bewegung des Verriegelungselements freigebende Stellung bewegt wird. Auf diese Weise wird sichergestellt, dass das Sperrelement das Verriegelungselement nicht mehr blockiert, sobald die Öffnung des mit der Sitzfläche verbundenen Bauteils sich vor dem Verriegelungselement befindet, wodurch trotz der oben beschriebenen Blockierung des Verriegelungselements in der horizontalen Stellung der Sitzfläche ein sicheres Verriegeln derselben in ihrer vertikalen Stellung gegeben ist. Dabei handelt es sich um eine Zwangssteuerung des Sperrelements, wodurch auf eine aufwändige elektronische Steuerung desselben verzichtet werden kann.

Eine in der Praxis sehr einfach zu realisierende Ausführungsform dieser Zwangssteuerung des Sperrelements mittels des mit der Sitzfläche verbundenen Bauteils ergibt sich, wenn an dem mit der Sitzfläche verbundenen Bauteil ein Mitnehmer zur Bewegung des Sperrelements in seine die Bewegung des Verriegelungselements freigebende Stellung angebracht ist.

Um den Fahrgästen zu signalisieren, dass der Fahrgastsitz nicht benutzt werden kann, kann des Weiteren eine Anzeigeeinrichtung zur Anzeige der verriegelten Position der Sitzfläche vorgesehen sein.

Nachfolgend ist ein Ausführungsbeispiel der Erfindung anhand der Zeichnung prinzipmäßig dargestellt.

Es zeigt:
- Fig. 1: einen erfindungsgemäßen Fahrgastsitz mit der Sitzfläche in ihrer horizontalen Nutzstellung;
- Fig. 2: den Fahrgastsitz aus Fig. 1 mit der Sitzfläche in ihrer vertikalen Ruhestellung;
- Fig. 3: eine Ansicht der Verriegelungseinrichtung des erfindungsgemäßen Fahrgastsitzes gemäß dem Pfeil III aus Fig. 2;
- Fig. 4: eine perspektivische Ansicht der Verriegelungseinrichtung in einer ersten Stellung;
- Fig. 5: die Verriegelungseinrichtung aus Fig. 4 in einer zweiten Stellung; und
- Fig. 6: die Verriegelungseinrichtung aus Fig. 4 in einer dritten Stellung.

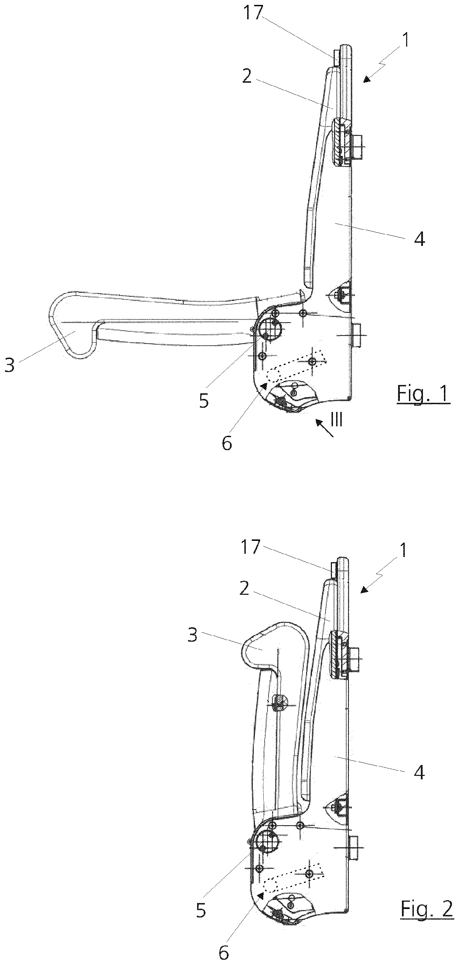

Fig. 1 zeigt eine Seitenansicht eines als blockierbarer Klappsitz ausgebildeten Fahrgastsitzes 1, der in an sich bekannter Weise eine Rückenlehne 2 und eine Sitzfläche 3 aufweist. Die Rückenlehne 2 ist starr an einem Sitzrahmen 4 angebracht. Demgegenüber ist die Sitzfläche 3 zwischen einer in Fig. 1 dargestellten Nutzstellung, in dem die Sitzfläche 3 im Wesentlichen horizontal ausgerichtet ist, und einer in Fig. 2 dargestellten Ruhestellung, in der die Sitzfläche 3 im Wesentlichen vertikal ausgerichtet ist, um eine an dem Sitzrahmen 4 angebrachte Drehachse 5 klappbar. Die Sitzfläche 3 ist im vorliegenden Fall so ausgelegt, dass sie, nachdem der Fahrgast den Fahrgastsitz 1 verlässt, selbsttätig von der horizontalen Nutzstellung in die vertikale Ruhestellung geht. Hierzu können geeignete Federelemente vorgesehen sein, die in an sich bekannter Weise zum Beispiel als Torsionsfedern ausgeführt sein können.

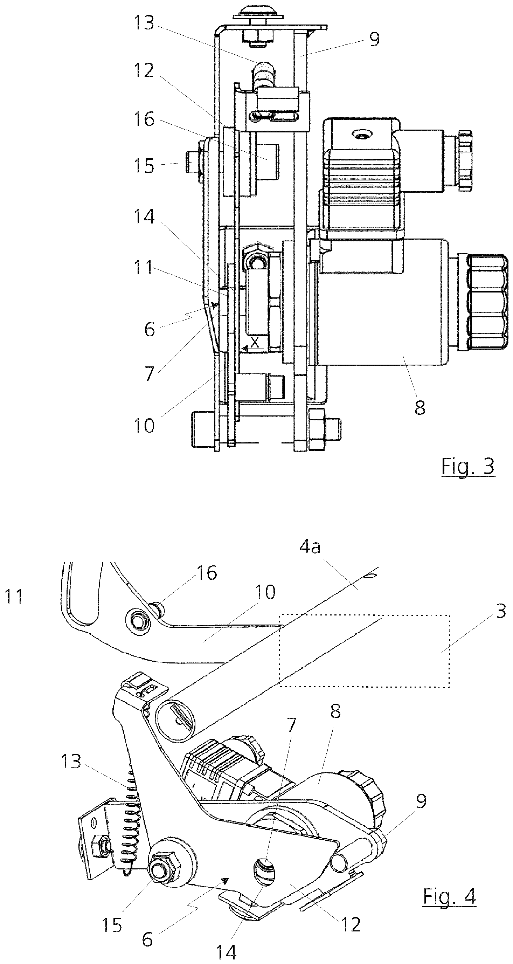

Der Fahrgastsitz 1 ist zum Einbau in ein Verkehrsmittel, wie beispielsweise einen Bus, insbesondere einen Stadtbus, vorgesehen, wobei die in Fig. 2 dargestellte Ruhestellung der Sitzfläche 3 dazu dient, die nutzbare Fläche innerhalb des Verkehrsmittels zu vergrößern, um mehr Fahrgäste aufnehmen zu können. Um die Sitzfläche 3 in ihrer Ruhestellung verriegeln zu können, ist eine Verriegelungseinrichtung 6 vorgesehen, die in den Figuren 1 und 2 nur angedeutet ist. Die Verriegelungseinrichtung 6 ist von einer von dem Fahrgastsitz 1 entfernten Position, nämlich von einem nicht dargestellten Fahrersitz des Verkehrsmittels, in dem sich mehrere der Fahrgastsitze 1 befinden, steuerbar. Mittels dieser Steuerung der Verriegelungseinrichtung 6 kann ein in den Figuren 3 bis 6 dargestelltes Verriegelungselement 7 der Verriegelungseinrichtung 6 in eine die Sitzfläche 3 in ihrer Ruhestellung verriegelnde Position gebracht werden. Die Verbindung einer nicht dargestellten Steuereinrichtung, auf die der Fahrer des Verkehrsmittels Zugriff hat, mit der Verriegelungseinrichtung 6 kann kabellos oder kabelgebunden sein.

Fig. 3 zeigt eine detailliertere Ansicht der Verriegelungseinrichtung 6 in ihrer die Sitzfläche 3 in ihrer Ruhestellung verriegelnden Position. Die Verriegelungseinrichtung 6 weist eine elektrische Betätigungseinrichtung 8 auf, die dazu dient, das Verriegelungselement 7 zwischen der die Sitzfläche 3 freigebenden und die Sitzfläche 3 in ihrer Ruhestellung verriegelnden Position zu bewegen. Die in Fig. 3 mit "x" bezeichnete Bewegungsrichtung des Verriegelungselements 7 verläuft parallel zu der Drehachse 5 der Sitzfläche 3. Die elektrische Betätigungseinrichtung 8, die im vorliegenden Fall als Elektromagnet ausgebildet ist, ist an einem Rahmenelement 9 angebracht, das weitere Teile der Verriegelungseinrichtung 6 aufnimmt bzw. an dem weitere Bauteile der Verriegelungseinrichtung 6 gelagert sind. Die elektrische Betätigungseinrichtung 8 der Verriegelungseinrichtung 6 ist also mit einem starren Teil des Fahrgastsitzes 1 verbunden.

Die Verriegelungseinrichtung 6 weist ein mit der Sitzfläche 3 zumindest mittelbar verbundenes Bauteil 10 auf, das in den Figuren 4 bis 6 deutlicher erkennbar ist und dessen Bewegung aufgrund der Verbindung mit der Sitzfläche 3 an die Bewegung der Sitzfläche 3 gekoppelt ist. Die Verbindung des Bauteils 10 mit der Sitzfläche 3 erfolgt im vorliegenden Fall über ein in den Figuren 4 bis 6 dargestelltes, einen Teil des Sitzrahmens 4 darstellendes Rahmenrohr 4a. Bei der Bewegung der Sitzfläche 3 wird das mit derselben verbundene Bauteil 10 entsprechend bewegt, wie aus einem Vergleich der Figuren 4 bis 6 untereinander erkennbar ist. Das Bauteil 10 weist eine Öffnung 11 auf, die im vorliegenden Fall als Langloch ausgebildet ist und in die das Verriegelungselement 7 zum Verriegeln der Sitzfläche 3 in ihrer Ruhestellung einfährt. In Fig. 3 ist die Öffnung 11 in dem Bauteil 10 nicht erkennbar, sondern lediglich mit dem Bezugszeichen 11 angedeutet.

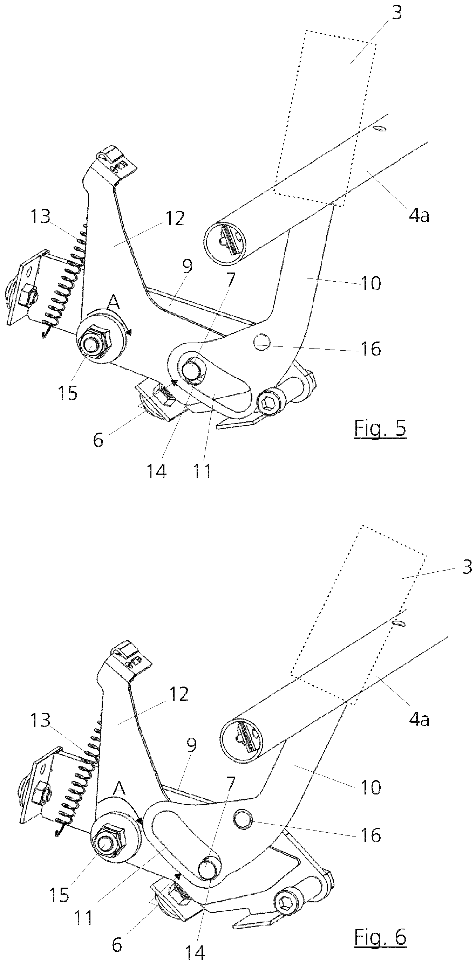

Fig. 4 zeigt die nur mittels gestrichelter Linien angedeutete Sitzfläche 3 in ihrer Nutzstellung, in der sowohl die Sitzfläche 3 als auch das Bauteil 10 im Wesentlichen horizontal ausgerichtet sind, wobei das Bauteil 10 gegenüber der Sitzfläche 3 jedoch um 180° versetzt ist. Dagegen zeigt Fig. 5 die Sitzfläche 3 in ihrer Ruhestellung, in der sowohl die Sitzfläche 3 als auch das Bauteil 10 im Wesentlichen vertikal ausgerichtet sind. Während die Sitzfläche 3 nach oben gerichtet ist, ist das Bauteil 10 nach unten gerichtet und befindet sich in einer Position, in der die Öffnung 11 vor dem Verriegelungselement 7 liegt, sodass das Verriegelungselement 7 beim Ausfahren in die Öffnung 11 einfährt und das Bauteil 10 und somit letztendlich die Sitzfläche 3 verriegelt.

Um die Sitzfläche 3 in ihrer vertikalen Ruhestellung zu verriegeln, muss also die elektrische Betätigungseinrichtung 8 betätigt werden, um das Verriegelungselement 7 in die Öffnung 11 des mit der Sitzfläche 3 verbundenen Bauteils 10 einzufahren. Da die Öffnung 11, wie oben beschrieben, als Langloch ausgebildet ist, kann in dieser Position die Sitzfläche 3 wieder geringfügig nach vorne geschwenkt werden, bis das Verriegelungselement 7 am gegenüberliegenden Ende der Öffnung 11 anschlägt und somit die Bewegung der Sitzfläche 3 begrenzt. Dadurch können eventuell zwischen der Sitzfläche 3 und der Rückenlehne 2 eingeklemmte Gegenstände, wie beispielsweise Jacken und dergleichen, leicht entfernt werden. Des Weiteren wird auf diese Weise ein zu starkes Einklemmen dieser Gegenstände bei der Verschwenkung der Sitzfläche 3 nach oben verhindert.

Um ein vollständiges Ausfahren des Verriegelungselements 7 in einem Zustand zu verhindern, in dem die Öffnung 11 des Bauteils 10 noch nicht vor dem Verriegelungselement 7 angeordnet ist, ist ein Sperrelement 12 vorgesehen, dessen Funktion unter Bezugnahme auf die Figuren 4 und 5 nachfolgend näher beschrieben wird. Wie in Fig. 4 dargestellt, blockiert das Sperrelement 12 in der Nutzstellung der Sitzfläche 3 die Bewegung des Verriegelungselements 7, in dem das Sperrelement 12 in dieser Stellung vor dem Verriegelungselement 7 angeordnet ist und somit das vollständige Ausfahren desselben verhindert. Um das Sperrelement 12 in dieser Position zu halten, ist an demselben ein im vorliegenden Fall als Zugfeder ausgebildetes Federelement 13 angebracht. Das Federelement 13 hält also das Sperrelement 12 in seiner die Bewegung des Verriegelungselements 7 blockierenden Stellung. Um dem Verriegelungselement 7 das Durchfahren durch das Sperrelement 12 zu erlauben, weist dieses eine Ausnehmung 14 auf, die in dem Zustand von Fig. 4 nicht mit dem Verriegelungselement 7 ausgerichtet ist, um die oben beschriebene Blockierung der Bewegung des Verriegelungselements 7 zu erreichen.

Wie aus einem Vergleich der Figuren 4 und 5 hervorgeht, sorgt das mit der Sitzfläche 3 verbundene Bauteil 10 bei seiner durch die Bewegung der Sitzfläche 3 hervorgerufenen Bewegung dafür, dass das Sperrelement 12 entgegen der durch das Federelement 13 aufgebrachten Kraft gemäß dem Pfeil A um eine Drehachse 15 gedreht und damit in eine die Bewegung des Verriegelungselements 7 freigebende Stellung bewegt wird, die in Fig. 5 dargestellt ist. Um diese Bewegung des Sperrelements 12 durch die Bewegung des Bauteils 10 hervorzurufen, weist das Bauteil 10 im dargestellten Ausführungsbeispiel einen Mitnehmer 16 auf, der in einer bestimmten Position bei der Drehbewegung des Bauteils 10 an dem Sperrelement 12 anschlägt und dieses, wie oben erwähnt, mitnimmt und gegen die Kraft des Federelements 13 in die Position von Fig. 5 bringt. Der Mitnehmer 16 ist im vorliegenden Fall als Bolzen ausgebildet, der mit dem Bauteil 10 verschraubt ist. In dieser Position sind sowohl die Ausnehmung 14 in dem Sperrelement 12 als auch die Öffnung 11 in dem Bauteil 10 mit der Bewegungsrichtung des Verriegelungselements 7 ausgerichtet, so dass dieses sowohl durch die Ausnehmung 14 als auch durch die Öffnung 11 fahren kann, um dadurch das Bauteil 10 in der in Fig. 5 dargestellten Position zu verriegeln. In dem Rahmenelement 9 befindet sich ebenfalls eine in den Figuren nicht dargestellte Bohrung, in welche das Verriegelungselement 7 in seiner Endstellung einfährt, so dass eine sehr hohe Stabilität des Verriegelungselements 7 in seiner Verriegelungsstellung erreicht wird. Wie bereits oben erwähnt, ist aufgrund der Ausführung der Öffnung 11 als Langloch in der verriegelten Position gemäß Fig. 5 ein geringfügiges Verschwenken der Sitzfläche 3, beispielsweise um einen Winkel von ca. 15°, möglich. Dennoch wird diese Position als die verriegelte Position der Sitzfläche 3 in ihrer vertikalen Ruhestellung bezeichnet. Gegebenenfalls könnte die Öffnung 11 in dem Bauteil 10 auch als kreisrunde Bohrung ausgeführt werden, wenn auf die Möglichkeit des Bewegens der Sitzfläche 3 in ihrem eigentlich verriegelten Zustand verzichtet würde.

Durch das Sperrelement 12 wird ermöglicht, dass eine die Verriegelungseinrichtung 6 betätigende Position, beispielsweise der Fahrer des Verkehrsmittels, mit dem der Fahrgastsitz 1 ausgestattet ist, die Verriegelungseinrichtung 6 auch dann betätigen kann, wenn sich die Sitzfläche 3 noch in der horizontalen Nutzstellung befindet. In diesem Fall schlägt nach der Betätigung der Verriegelungseinrichtung 6 das Verriegelungselement 7 an dem Sperrelement 12 an und kann seine in Fig. 3 dargestellte Endstellung nicht erreichen. Dies ist erst dann möglich, wenn das Sperrelement 12 durch die Bewegung des Bauteils 10 bzw. durch die Bewegung der Sitzfläche 3 in eine Position gebracht wird, in der die Ausnehmung 14 in dem Sperrelement 12 mit der Bewegungsrichtung des Verriegelungselements 7 fluchtet.

Grundsätzlich wäre es auch möglich, auf das Sperrelement 12 zu verzichten und nach Betätigung der elektrischen Betätigungseinrichtung 8 das Verriegelungselement 7 erst dann auszufahren, wenn sich die Sitzfläche 3 in ihrer vertikalen Ruhestellung befindet. In diesem Fall könnten zum Beispiel Sensoren vorgesehen sein, um die Position der Sitzfläche 3 bzw. des mit der Sitzfläche 3 verbundenen Bauteils 10 abzufragen und an eine entsprechende, das Ausfahren des Verriegelungselements 7 steuernde Steuereinrichtung weitergeben.

Der Fahrgastsitz 1 weist des Weiteren ein im dargestellten Ausführungsbeispiel an der Rückenlehne 2 angebrachtes Anzeigeelement 17 auf, das zur Anzeige der verriegelten Position der Sitzfläche 3 dient. Im vorliegenden Fall ist die Anzeigeeinrichtung 17 als Leuchtelement ausgebildet, es wäre jedoch auch möglich, zusätzlich oder alternativ ein akustisches Anzeigeelement vorzusehen.

Die Anzeigeeinrichtung 17 kann ausgelöst werden, wenn die Verriegelungseinrichtung 6 ausgelöst wurde, es ist jedoch auch möglich, die Anzeigeeinrichtung 17 erst dann auszulösen, wenn sich die Sitzfläche 3 in ihrer vertikalen Ruhestellung befindet und dort mittels der Verriegelungseinrichtung 6 verriegelt wurde.

## Patentansprüche

1. Fahrgastsitz (1) für ein Verkehrsmittel, mit einer Rückenlehne (2), einer gegenüber der Rückenlehne (2) zwischen einer im Wesentlichen horizontalen Nutzstellung und einer im Wesentlichen vertikalen Ruhestellung um eine Drehachse (5) klappbaren Sitzfläche (3) und mit einer Verriegelungseinrichtung (6), die ein Verriegelungselement (7) zum Verriegeln der Sitzfläche (3) in ihrer Ruhestellung aufweist, wobei die Sitzfläche (3) so ausgebildet ist, dass sie selbsttätig von der horizontalen Nutzstellung in die vertikale Ruhestellung geht,
**dadurch gekennzeichnet, dass**
die Verriegelungseinrichtung (6) von einem Fahrer des Verkehrsmittels von seinem Fahrersitz aus steuerbar ist, um das Verriegelungselement (7) in seine die Sitzfläche (3) in ihrer Ruhestellung verriegelnden Position zu bringen, und dass eine Verriegelung der Sitzfläche (3) in ihrer Ruhestellung mittels des Verriegelungselements (7) nur dann möglich ist, wenn sich die Sitzfläche (3) in ihrer Ruhestellung befindet.

2. Fahrgastsitz nach Anspruch 1,
**dadurch gekennzeichnet, dass**
das Verriegelungselement (7) mittels einer elektrischen Betätigungseinrichtung (8) in seine die Sitzfläche (3) in ihrer Ruhestellung verriegelnde Position beweglich ist.

3. Fahrgastsitz nach Anspruch 2,
**dadurch gekennzeichnet, dass**
die elektrische Betätigungseinrichtung (8) als Elektromagnet ausgebildet ist.

4. Fahrgastsitz nach Anspruch 1, 2 oder 3,
**dadurch gekennzeichnet, dass**
das Verriegelungselement (7) in eine Öffnung (11) eines mit der Sitzfläche (3) zumindest mittelbar verbundenen Bauteils (10) einfahrbar ist.

5. Fahrgastsitz nach Anspruch 4,
**dadurch gekennzeichnet, dass**
die in dem mit der Sitzfläche (3) verbundenen Bauteil (10) vorgesehene Öffnung (11) als Langloch ausgebildet ist.

6. Fahrgastsitz nach einem der Ansprüche 4 oder 5,
**gekennzeichnet durch**
ein Sperrelement (12), das in der Nutzstellung der Sitzfläche (3) so gegenüber dem Verriegelungselement (7) angeordnet ist, dass es die Bewegung des Verriegelungselements (7) blockiert.

7. Fahrgastsitz nach Anspruch 6,
**dadurch gekennzeichnet, dass**
das Sperrelement (12) durch ein Federelement (13) in seiner die Bewegung des Verriegelungselements (7) blockierenden Stellung gehalten ist.

8. Fahrgastsitz nach Anspruch 6 oder 7,
**dadurch gekennzeichnet, dass**
das mit der Sitzfläche (3) verbundene Bauteil (10) so gegenüber dem Sperrelement (12) angeordnet ist, dass das Sperrelement (12) durch die Bewegung des mit der Sitzfläche (3) verbundenen Bauteils (10) in eine die Bewegung des Verriegelungselements (7) freigebende Stellung bewegt wird.

9. Fahrgastsitz nach Anspruch 8,
**dadurch gekennzeichnet, dass**
an dem mit der Sitzfläche (3) verbundenen Bauteil (10) ein Mitnehmer (16) zur Bewegung des Sperrelements (12) in seine die Bewegung des Verriegelungselements (7) freigebende Stellung angebracht ist.

10. Fahrgastsitz nach einem der Ansprüche 1 bis 9,
**gekennzeichnet durch**
eine Anzeigeeinrichtung (17) zur Anzeige der verriegelten Position der Sitzfläche (3).

## Claims

1. Passenger seat (1) for a means of transport, with a backrest (2), a seat surface (3) which is foldable about an axis of rotation (5) in relation to the backrest (2) between a substantially horizontal use position and a substantially vertical inoperative position, and with a locking device (6) which has a locking element (7) for locking the seat surface (3) in its inoperative position, wherein the seat surface (3) is designed in such a manner that it automatically passes from the horizontal use position into the vertical inoperative position,
**characterized in that**
the locking device (6) is controllable by a driver of the means of transport from his driver's seat in order to bring the locking element (7) into its position locking the seat surface (3) in its inoperative position, and **in that** locking of the seat surface (3) in its inoperative position by means of the locking element (7) is possible only whenever the seat surface (3) is in its inoperative position.

2. Passenger seat according to Claim 1,
**characterized in that**
the locking element (7) is movable by means of an electric actuating device (8) into its position locking the seat surface (3) in its inoperative position.

3. Passenger seat according to Claim 2,
**characterized in that**
the electric actuating device (8) is in the form of an electromagnet.

4. Passenger seat according to Claim 1, 2 or 3,
**characterized in that**
the locking element (7) is retractable into an opening (11) in a component (10) which is at least indirectly connected to the seat surface (3).

5. Passenger seat according to Claim 4,
**characterized in that**
the opening (11) provided in the component (10) connected to the seat surface (3) is in the form of an elongated hole.

6. Passenger seat according to either of Claims 4 and 5,
**characterized by**
a blocking element (12) which, in the use position of the seat surface (3), is arranged in relation to the locking element (7) in such a manner that it blocks the movement of the locking element (7).

7. Passenger seat according to Claim 6,
**characterized in that**
the blocking element (12) is held in its position blocking the movement of the locking element (7) by a spring element (13).

8. Passenger seat according to Claim 6 or 7,
**characterized in that**
the component (10) connected to the seat surface (3) is arranged in relation to the blocking element (12) in such a manner that the blocking element (12) is moved by the movement of the component (10) connected to the seat surface (3) into a position releasing the movement of the locking element (7).

9. Passenger seat according to Claim 8,
**characterized in that**
a driver (16) for moving the blocking element (12) into its position releasing the movement of the locking element (7) is attached to the component (10) connected to the seat surface (3).

10. Passenger seat according to one of Claims 1 to 9,
**characterized by**
an indicating device (17) for indicating the locked position of the seat surface (3).

## Revendications

1. Siège de passager (1) pour un moyen de transport, avec un appui dorsal (2) et une surface d'assise pliante (3) entre une position sensiblement horizontale d'utilisation et une position sensiblement verticale de repos, autour d'un axe de rotation (5) et comportant une installation de verrouillage (6), qui comporte un élément de verrouillage (7) pour verrouiller la surface d'assise (3) dans sa position de repos, dans lequel la surface d'assise (3) est agencée de telle manière qu'elle se positionne de façon autonome de la position horizontale d'utilisation dans la position verticale de repos,
**caractérisé en ce que**,
l'installation de verrouillage (6) peut être commandée par un conducteur du moyen de transport à partir de son siège de conducteur, pour que l'élément de verrouillage (7) amène sa surface d'assise (3) dans sa position verrouillée de repos, et pour qu'un verrouillage de la surface d'assise (3) dans sa position de repos au moyen de l'élément de verrouillage (7), ne soit possible que si la surface d'assise (3) se trouve dans la position de repos.

2. Siège de passager selon la revendication 1,
**caractérisé en ce que**,
l'élément de verrouillage (7), est susceptible, au moyen d'une installation d'actionnement (8) électrique, de rendre mobile la surface d'assise (3) dans sa position verrouillée de repos.

3. Siège de passager selon la revendication 2,
**caractérisé en ce que**,
l'installation d'actionnement électrique (8), est constituée d'un électroaimant.

4. Siège de passager selon les revendications 1, 2 ou 3,
**caractérisé en ce que**,
l'élément de verrouillage (7), peut être engagé dans une ouverture (11) d'une pièce constructive (10) qui est au moins partiellement liée à la surface d'assise (3).

5. Siège de passager selon la revendication 4,
**caractérisé en ce que**,
ladite ouverture (11) qui est liée à ladite pièce constructive (10) au moins partiellement attachée à la surface d'assise (3), est constituée d'un trou allongé.

6. Siège de passager selon les revendications 4 ou 5,
**caractérisé par**,
un élément de blocage (12), qui, dans la position d'utilisation de la surface d'assise (3) est disposé en opposition par rapport à l'élément de verrouillage (7), de telle manière qu'il bloque le mouvement de l'élément de verrouillage (7).

7. Siège de passager selon la revendication 6,
**caractérisé en ce que**,
l'élément de blocage (12), est maintenu dans sa position de blocage du déplacement de l'élément de verrouillage (7) par un élément ressort (13).

8. Siège de passager selon les revendications 6 ou 7,
**caractérisé en ce que**,
la pièce constructive (10) qui est au liée à la surface d'assise (3) est disposée par rapport à l'élément de blocage (12), de telle manière que l'élément de blocage (12), par le déplacement de la pièce constructive (10) liée à la surface d'assise (3) déplace l'élément de verrouillage (7) dans une position qui libère son déplacement.

9. Siège de passager selon la revendication 8,
**caractérisé en ce que**,
à la surface d'assise (3) liée à la pièce constructive (10), est disposé un entraîneur (16) pour le déplacement de l'élément de blocage (12) dans la position qui libère le mouvement de l'élément de verrouillage (7).

10. Siège de passager selon l'une des revendications 1 à 9,
**caractérisé par**,
une installation d'affichage (17) pour indiquer la position verrouillée de la surface d'assise (3).
